# EUROPÄISCHE PATENTSCHRIFT

(11) **EP 3 216 581 B1**
(45) Veröffentlichungstag und Bekanntmachung des Hinweises auf die Patenterteilung: **25.09.2019**
(21) Anmeldenummer: 16159028.6
(22) Anmeldetag: 07.03.2016
(51) Int. Cl.: B29C 45/14

(54) **VERFAHREN ZUR HERSTELLUNG EINES FLÄCHENGEBILDES IN SANDWICH-LEICHTBAU-AUSFÜHRUNG**
METHOD OF PRODUCING A FLAT ARTICLE IN SANDWICH LIGHTWEIGHT CONSTRUCTION DESIGN
PROCEDE DE FABRICATION D'UNE STRUCTURE PLATE DE CONSTRUCTION LEGERE EN SANDWICH

(43) Veröffentlichungstag der Anmeldung: 13.09.2017
(60) Teilanmeldung: 19187499.9
(73) Patentinhaber: Maucher Formenbau GmbH & Co. KG, 88046 Friedrichshafen (DE)
(72) Erfinder: STRITTMATTER, Peter, 88046 Friedrichshafen (DE)
(74) Vertreter: Engelhardt, Volker

(56) Entgegenhaltungen:
- EP-A1- 1 097 794
- DE-A1-102008 032 730

## Beschreibung

Die Erfindung bezieht sich auf ein Verfahren zur Herstellung eines formstabilen Flächengebildes in Sandwich-Leichtbau-Ausführung sowie ein Flächengebilde nach dem Oberbegriff des Patentanspruches 11.

Es ist hinlänglich bekannt, unterschiedliche Werkstoffe in eine Sandwich-Anordnung zu bringen, diese miteinander zu verbinden und anschließend mittels Formwerkzeugen in eine formgebende Struktur zu überführen.

Durch die DE 10 2008 032 730 A1 ist ein Verfahren zum Herstellen eines mehrschichtigen Bauteiles in Form eines Flächengebildes beschrieben. Dabei besteht das Flächengebilde aus einem Trägerbauteil und einer Oberflächenschicht. Diese werden in ein Formwerkzeug mit einem Zwischenraum eingelegt. Zwischen dem Trägerbauteil und der Oberflächenschicht soll ein Freiraum vorhanden sein, in den EPP-Partikel Schaumstoff eingefüllt ist.

Aus der EP 1 097 794 A1 ist ein Formwerkzeug zur Herstellung von mehrschichtigen Formteilen und seine Verwendung beschrieben, dabei soll das Formteil durch umformen insbesondere durch ein Zieh-Formen von im Wesentlichen flächigen thermoplastischen Halbzeugen mit wenigstens einem Ober- und wenigstens einem Unterwerkzeug und zumindest an einem der Werkzeuge angeordnet gesteuerten beweg baren Verschlussteilen, zum ganzseitigen Begrenzen des Formraumes, die Verschlussteile temperierbar, vorgesehen sein.

Als nachteilig hat sich dabei herausgestellt, dass die entsprechenden Werkstoffpaarungen auf der einen Seite die Stabilität des hergestellten Flächengebildes beeinflussen und auf der anderen Seite die Eigengewichtskraft des Flächengebildes betreffen. Wenn beispielsweise eine Werkstoffpaarung aus verschiedenen Kunststoffen gewählt ist, ist oftmals die Eigengewichtskraft des Flächengebildes geringer als wenn das Flächengebilde aus einer Werkstoffpaarung aus Metall gefertigt ist. Durch die Reduzierung der Eigengewichtskraft verliert jedoch das hergestellte Flächengebilde an Formstabilität, so dass dieses lediglich für einen eng begrenzten Verwendungszweck benutzt werden kann.

Aus dem zitierten Stand der Technik ist es zwar bekannt Werkstoffpaarungen aus thermoplastischen und EPP-Partikel-Schaumstoff miteinander zu kombinieren, um ein Flächengebilde zu schaffen, dass verformbar ist und dass eine gewisse Eigenstabilität aufweist, jedoch ist aus diesem Stand der Technik nicht zu entnehmen, dass die Werkstoffpaarungen in einem bestimmten Herstellungsverfahren miteinander verbunden werden können. Die verwendeten Werkstoffe sind daher unkontrolliert bzw. oftmals ungenügend verteilt zur Herstellung des Kernes angeordnet, wodurch der Kern als Trägerlicht unterschiedliche Festigkeitsbereiche aufweist. In Bereichen mit einer geringen Partikelanordnung können Durchbrüche oder sonstige Beschädigungen entstehen, da dort die Wandstärke geringer ist und/oder die Festigkeit kleiner ist als in benachbarten Bereichen. Eine solche Instabilität oder Inhomogenität des verwendeten Werkstoffes EPP führt demnach zu Beschädigungen, wenn in diesen Bereichen entsprechende Belastungen einwirken.

Es ist daher Aufgabe der Erfindung, ein Verfahren zur Herstellung eines Flächengebildes bereitzustellen, durch das zum einen ein solches in Sandwich-Leichtbau-Ausführung gefertigt werden kann und zum anderen eine sehr hohe Eigenstabilität oder Biegesteifigkeit aufweist, so dass das gefertigte Flächengebilde in einer Vielzahl von unterschiedlichsten Verwendungen einsetzbar ist, bspw. um Ersatzräder in Fahrzeuge aufzunehmen, um als Unterboden oder Karosserie für Fahrzeuge zu dienen, um eine Abdeckhaube zu bilden oder dgl. mehr.

Diese Aufgaben sind erfindungsgemäß durch die Merkmale des Patentanspruches 1.

Weitere vorteilhafte Weiterbildungen der Erfindung ergeben sich aus den Unteransprüchen.

Es ist besonders vorteilhaft, wenn die Deckschichten aus einem Thermoplastwerkstoff und der Kern aus einem expandierbaren Polypropylen (EPP), einem expandierbaren Polystryrol (EPS) oder einem expandierbaren Polyethylen (EPE) bestehen, denn dadurch ist gewährleistet, dass zum einen eine feste Verbindung zwischen der jeweiligen Deckschicht und dem Kern entsteht und zum anderen das derart gefertigte Flächengebilde im aufgeheizten Zustand mittels zweier Formwerkzeuge in eine Struktur umgeformt werden kann, die nach dem Aushärten bzw. Abkühlen eine formstabile Kontur aufweist, mit einer extrem hohen Biegesteifigkeit. Die Deckschichten sind nämlich durch den dazwischen angeordneten Kern vollflächig miteinander verbunden, so dass ein einstückiges Flächengebilde entsteht und gleichzeitig ist die Biegesteifigkeit der Deckschichten durch den Kern erhöht.

Da mittels einer Unterdruckeinrichtung auf mindestens einer der Deckschichten ein Unterdruck gebildet ist, der auf den zwischen den Deckschichten angeordneten Kern bzw. dessen Volumenpartikel beim Befüllen des Zwischenraumes der beiden Deckschichten einwirkt, entsteht vorteilhafter Weise bei dem Aushärten und bei der Verteilung der den kernbildenden Volumenpartikel eine homogene Anordnung der Volumenpartikel. Somit ist die Verteilung der Volumenpartikel gleichmäßig und es bestehen keinerlei Unregelmäßigkeiten, durch die die Formstabilität oder die Festigkeit des Kernes beeinflusst ist.

Um den thermoplastischen Zustand zur Verbindung der Deckschichten mit dem jeweiligen Kern zu erreichen, ist es erforderlich, die Deckschichten zunächst zu erwärmen und anschließend einen plattenförmigen Kern zwischen diesen Deckschichten einzulegen oder die Deckschichten werden derart miteinander in ihrem jeweiligen Randbereich oder außerhalb zu diesem miteinander verbunden, dass ein Zwischenraum entsteht, in dem der Kern einspritzbar oder einfüllbar ist, der für diesen Herstellungsprozess aus einer Vielzahl von vereinzelten oder schaumförmig miteinander verbundenen Volumenteilen gebildet ist.

Die eingelegten Kerne oder die eingespritzten Volumenteile, die den Kern anschließend bilden, können mittels Wasserdampf erhitzt werden, so dass sich deren Ausdehnung vergrößert und die Volumenteile zu einem Kern verschmolzen sind, wodurch während des Umformvorganges zwischen den beiden Formwerkzeugen eine erhöhte Stabilität oder Biegesteifigkeit des derart gefertigten Flächengebildes einstellbar ist.

Die die Deckenschichten bildenden Werkstoffe sind gasdurchlässig, so dass sowohl der Wasserdampf aus dem Kern durch die jeweilige Deckschicht entweichen kann als auch während des Einlege- oder Einspritzungsvorganges ein Unterdruck erzeugt werden kann, durch den die Kerne in ihrer Ausdehnung reduziert sind. Nach dem oder während des Umformvorganges kann ein entsprechender Überdruck auf den Kern einwirken, so dass die den Kern bildenden Partikel der Werkstoffe aufgeweitet sind, wodurch sich eine Erhöhung der Biegesteifigkeit und/oder der Wandstärke des Flächengebildes erzeugen lässt.

Die aus den angegebenen Werkstoffen gefertigten Flächengebilde weisen demnach eine hohe Eigenstabilität und Biegesteifigkeit auf, so dass diese vorteilhafterweise in einer Vielzahl von unterschiedlichsten Anwendungen einsetzbar sind. Beispielsweise können solche Flächengebilde als Abdeckhauben, als Unterkonstruktion oder als Einlagegehäuse in Fahrzeugkarosserien verwendet werden. Es ist auch denkbar, diese Flächengebilde als Möbelstück, beispielsweise Schrankwand oder Bettgestell, zu verwenden. Wenn diese Flächengebilde einer erhöhten Verschmutzung durch Schmutzwasser und/oder Hitzestrahlung, beispielsweise von Auspuffrohren, ausgesetzt sind, ist es vorteilhaft, die der jeweiligen Verschmutzungs- oder Hitzeseite zugewandte Oberfläche des Flächengebildes zu verkleiden, beispielsweise durch eine Metallfolie oder durch einen entsprechenden Teppich oder eine sonstigen Schutzschicht aus Kunststoff oder einem anderen Material, das flüssigkeits- oder gasabweisend ist.

In der Zeichnung sind drei erfindungsgemäße Herstellungsverfahren für ein Flächengebilde in Sandwich-Leichtbau-Ausführung im Schnitt dargestellt, die nachfolgend näher erläutert sind. Im Einzelnen zeigt:
- Figuren 1a bis 1c sowie 2: ein erstes Herstellungsverfahren für ein formstabiles Flächengebilde mit zwei Deckschichten und einem einstückigen, plattenförmigen Kern,
- Figuren 3a und 3b: ein zweites Herstellungsverfahren für ein Flächengebilde mit zwei Deckschichten und einem Kern, der aus einer Vielzahl von vereinzelten oder schaumförmig miteinander verbundenen Volumenteilen gebildet ist, die in einen von den beiden Deckschichten eingeschlossenen Zwischenraum eingespritzt oder eindrückt sind,
- Figuren 4a und 4b: ein drittes Herstellungsverfahren für ein Flächengebilde mit zwei Deckschichten und einem vorstrukturierten, plattenförmigen Kern und
- Figuren 5a bzw. 5b: das nach einem der Herstellungsverfahren gefertigte Flächengebilde bzw. ein Flächengebilde mit einer zusätzlichen Schutzschicht aus einem Gewebe oder einem Vlies.

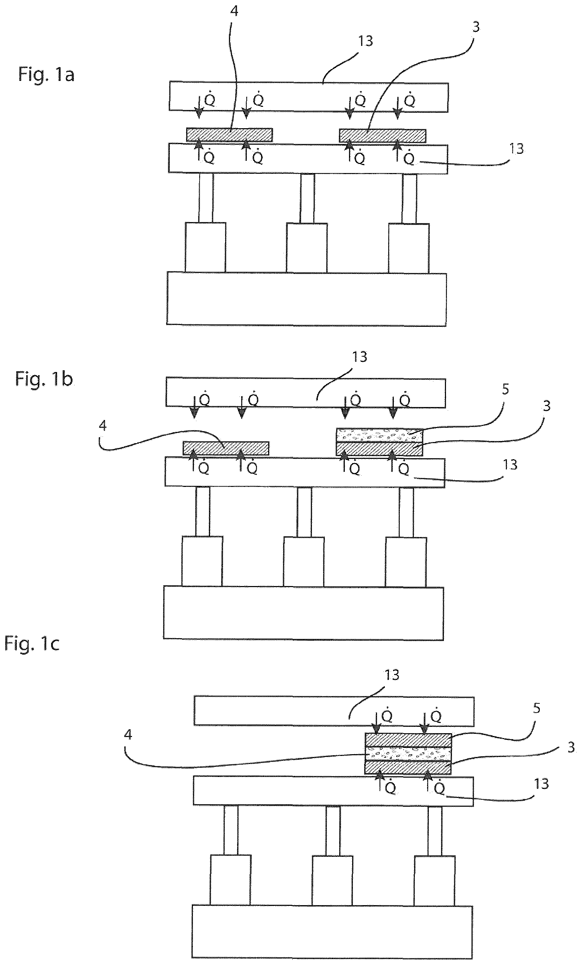

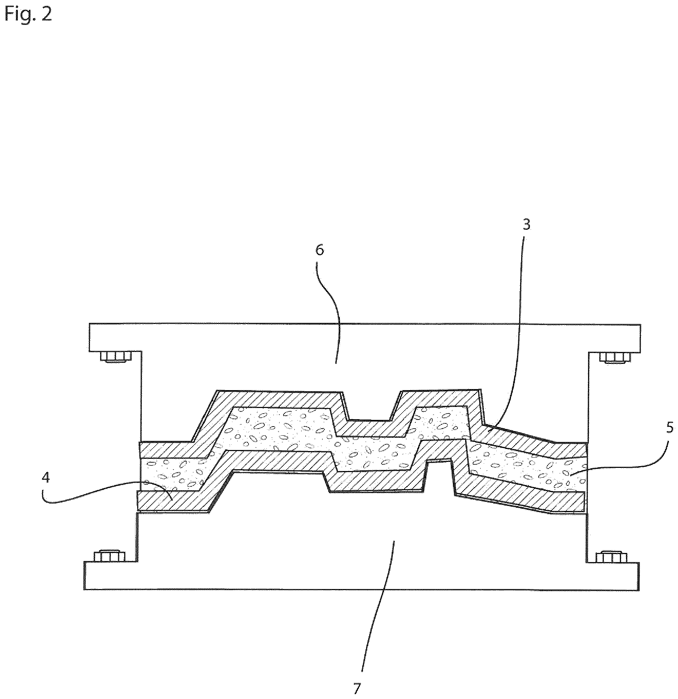

Ein in Leichtbau-Ausführung hergestelltes Flächengebilde 1 besteht gemäß den Figuren 1a bis 5b aus mindestens zwei Deckschichten 3, 4 und einem zwischen zwei Deckschichten 3,4 angeordneten Kern 5, die folglich in einer Sandwichbauweise angeordnet sind. Die jeweilige Deckschicht 3,4 ist aus einem Thermoplast-Werkstoff gebildet. Der Kern 5 ist dagegen aus einem expandierbaren Polypropylen (EPP), einem expandierbaren Polystyrol (EPS) oder einem expandierbaren Polyethylen (EPE) oder einem gleichwertigen expandierbaren Thermoplast-Werkstoff ausgeführt.

In den Figuren 1a bis 1c ist zu entnehmen, dass die einstückigen, plattenförmigen Deckschichten 3, 4, die vorzugsweise aus einem sogenannten low weight resistant thermoplast (LWRT) bestehen, vereinzelt vorgewärmt sind. Als Wärmequelle dient beispielsweise eine Infrarotlampe. In den Figuren 1 a bis 1 c ist der Wärmestrom von der Wärmeeinrichtung 13, beispielsweise der Infrarotlampe, auf die beiden Deckschichten 3, 4 schematisch mit der thermodynamisch üblichen Bezeichnung Q dargestellt.

Sobald die beiden Deckschichten 3, 4 auf eine vorgegebene Temperatur erwärmt sind, wird zwischen diesen ein einstückiger plattenförmiger Kern 5 aus einem der vorgenannten Werkstoffe (EPE, EPS oder EPP) eingelegt. Dieser Sandwich-Aufbau, bestehend aus den beiden Deckschichten 3, 4 und dem dazwischen angeordneten Kern 5, ist als Zwischen-Körper 2 bezeichnet. Dieser Körper 2 wird erneut erwärmt bzw. aufgeheizt, und zwar solange bis ein thermoplastischer Verformungszustand der verwendeten Werkstoffe erreicht ist. Dies führt dazu, dass zwischen dem Kern 5 und der jeweiligen Deckschicht 3 oder 4 eine Verbindung durch die Verschmelzung der Kontaktflächen zwischen der Deckschichten 3, 4 und dem Kern 5 erfolgt.

Sobald der Körper 2 in diesem thermoplastisch verformbaren Zustand aufgeheizt ist, wird dieser zwischen zwei Formwerkzeugen 6, 7 eingelegt, die eine vorgegebene Struktur aufweisen. Dabei korrespondieren die beiden Formwerkzeuge 6, 7 derart miteinander, dass diese eine Negativform des zu bildenden Flächengebildes 1 aufweisen. Wenn demnach die beiden Formwerkzeuge 6, 7 aufeinander zugestellt werden, wird der dazwischen eingelegte Körper 2 von den beiden Formwerkzeugen 6, 7 umgeformt, so dass die Konturen der Formwerkzeuge 6, 7 auf den Körper 2 übertragen sind. Nach dem Umformvorgang kühlt das Flächengebilde 1 zunächst in den Formwerkzeugen 6, 7 auf eine vorgegebene Temperatur derart ab, so dass eine thermoplastische Verformung nicht mehr möglich ist. Anschließend werden die beiden Formwerkzeuge 6, 7 voneinander getrennt und das abgekühlte und umgeformte Flächengebilde 1 kann entnommen werden. Der Abkühlvorgang kann dabei passiv oder durch aktive Kühlung, zur Verkürzung der Standzeiten, durchgeführt werden.

Das Flächengebilde 1 ist nach diesem Verfahrensschritt formstabil und weist aufgrund der Sandwichlichtbauform mit den beiden Deckschichten 3, 4 und dem Kern 5 hohe Festigkeiten auf.

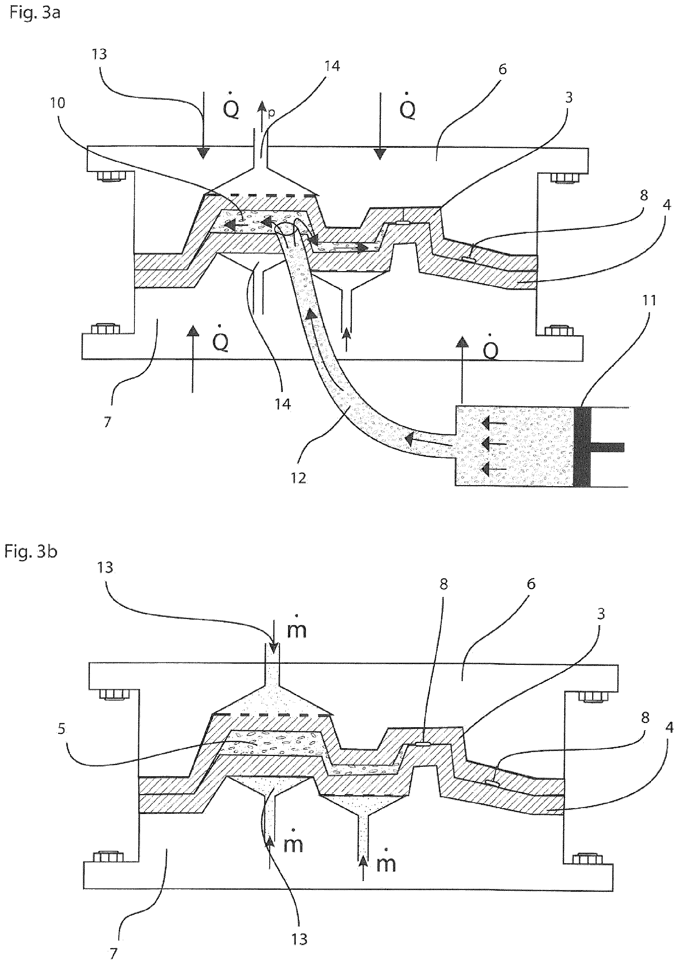

In Figur 3a ist gezeigt, dass die beiden Deckschichten 3, 4 zu einem nahezu vollständig geschlossenen Körper 2 zusammengefügt werden können, und zwar vor oder nach dem Erwärmen der beiden Deckschichten 3, 4. Die Deckschichten 3, 4 schließen demnach einen Zwischenraum 10 ein, denn die einstückigen und plattenförmigen Deckschichten 3, 4 sind voneinander beabstandet angeordnet und lediglich in ihrem Randbereich oder bereichsweise in ihrem Innenraum miteinander verbunden.

Die Deckschichten 3, 4 können an dem Formwerkzeuge 6, 7 mittels einer Unterdruckeinrichtung 14 durch einen Unterdruck oder mittels ein oder mehrerer Nadeln 8 gehalten sein. Hierzu sind in die Formwerkzeuge 6, 7 ein oder mehrere poröse Bereiche 20 in Form von Öffnungen oder Siebflächen eingearbeitet oder angebracht. Der poröse Bereich 20 ist gasdurchlässig und steht in Wirkverbindung mit der Unterdruckeinrichtung 14. Somit kann der gebildete Unterdruck auf die jeweilige Deckschicht 3, 4 direkt wirken.

Der den Kern 5 bildende Werkstoff ist vereinzelt und beispielsweise kugelförmig als Volumenteil 12 dargestellt. Die vereinzelten Volumenteile 12 sind mittels eines Drucckolbens 11 durch eine Einfüllöffnung 15 in den Zwischenraum 10 beispielsweise mittels eines Einfüllstutzens eingepresst oder eingespritzt und werden in diesem gleichmäßig verteilt.

Die optimale Verteilung der vereinzelten Volumenteile 12 kann beispielsweise durch einen Unterdruck erfolgen. Die Werkstoffe der Deckschichten 3, 4 sind nämlich gasdurchlässig, so dass aus dem Zwischenraum 10 mittels der Unterdruckeinrichtung 14 ein Unterdruck in dem Zwischenraum 10 erzeugen lässt. Dadurch sind zum einen die Größen bzw. Ausdehnungen der Volumenteile 12 in Abstimmung mit dem Förderdruck des Druckkolbens 11 einstellbar und zum anderen erfolgt eine gleichmäßige Verteilung der Volumenteile 12 im gesamten Zwischenraum 10.

Sobald die Volumenteile 12 vollständig in den Zwischenraum 10 eingefüllt sind ist die Einfüllöffnung 15 bzw. der Einfüllstutzen aus dem Zwischenraum 10 entfernt. Mittels einer Wärmezufuhr, vorzugsweise durch einen Massenstrom m von Heißwasserdampf 16 der durch den porösen Bereich 20 einbringbar ist, können die Volumenteile 12 fest miteinander verbunden werden, so dass ein einstückiger Kern 5 entsteht. Außerdem ist durch den Heißwasserdampf oder -strahl 16 erreicht, dass sich die Volumenteile 12 erweitern, im Vergleich mit ihrer ursprünglichen Ausdehnung während des Einfüllvorganges. Da die beiden Deckschichten 3, 4 fest an dem Formwerkzeug 6, 7 anliegen und miteinander verbunden sind, vergrößert sich der Zwischenraum 10 nicht, so dass bei einer Volumenausdehnung der Volumenteile 12 eine Festigkeitserhöhung stattfindet. Durch diese Expansion der Volumenteile 12 entsteht in dem Zwischenraum 10 ein Überdruck der die Deckschichten 3, 4 gegen das jeweilige Formwerkzeug 6, 7 presst, so dass eine besonders hohe Formgüte des Flächengebildes 1 erzielt ist. Ferner werden die Volumenteile 12 zu dem Kern verschmolzen und die Deckschichten 3, 4 und der Kern 5 miteinander verschmolzen bzw. verbunden.

Anschließend verweilt zur Abkühlung das derart gebildete Flächengebilde 1 im dem Formwergzeug 6, 7 für eine gegebene Zeit, bis der schmelzflüssige Zustand der eingesetzten Werkstoffe nicht weiter vorherrscht. Die Abkühlung kann durch aktive Kühltechniken beschleunigt werde.

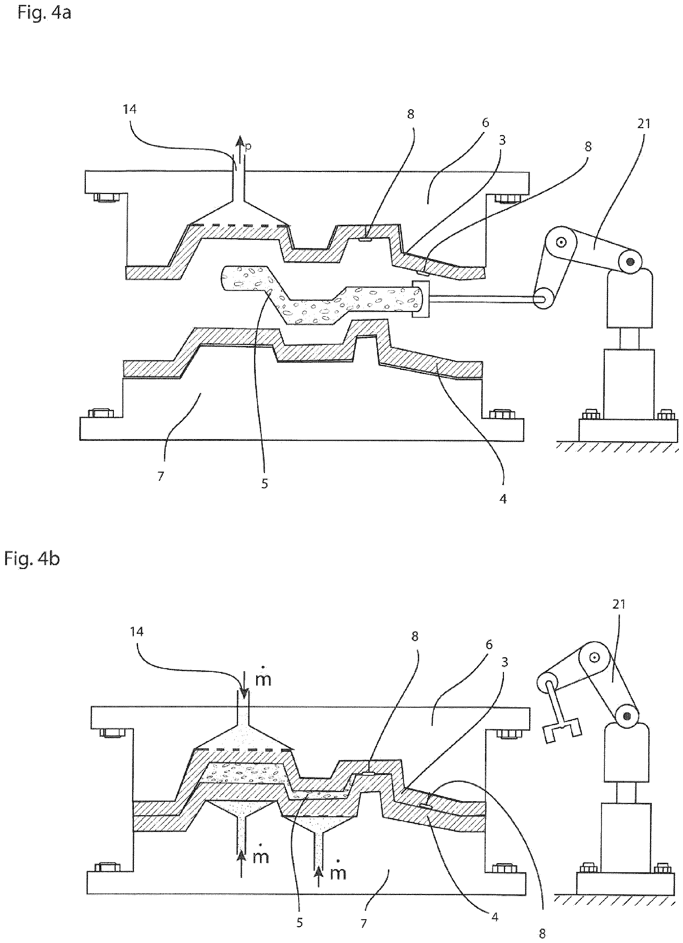

In Figur 4a ist dargestellt, dass sowohl die vorgewärmten Deckschichten 3, 4 auf dem Formwerkzeug 6, 7 als auch der Kern 5 durch eine Positioniervorrichtung 21 an die für diesen vorgesehene Position gehalten sind. Der Kern 5 ist im vormontierten Zustand einstückig und bereits strukturiert ausgeführt. Im Wesentlichen stimmt die Strukturierung des Kerns 5 mit dem sich zwischen den Deckschichten 3, 4 bilden Zwischenraum 10 überein jedoch kann durch eine Aufmaß der Strukturierung des Kerns gezielt Einfluss auf die Festigkeitseigenschaften des Kerns 5 im fertigen Flächengebilde 1 genommen werden.

Durch das Zustellen des Formwerkzeug 6, 7 werden die schmelzflüssigen und thermoplastisch verformbaren Deckschichten 3, 4 entsprechend der Vorgabe des Formwerkzeuges 6, 7 um den Kern 5 umgeformt aus diesem Körper 2 wird das Flächengebildes 1 somit gebildet.

Mittels einer Wärmeeinrichtung 13, ist vorzugsweise durch Heißwasserdampf ṁ eingebracht, wodurch der Kern 5 fest mit den Deckschichten 3, 4 durch einen verschmelzen der Kontaktflächen verbunden werden. Außerdem ist durch den Heißwasserstrahl oder -dampf 16 erreicht, dass sich die Volumenteile 12 des Kerns 5 expandiert sind. Da die beiden Deckschichten 3, 4 fest an dem Formwerkzeug 6, 7 anliegen und miteinander verbunden sind, vergrößert sich der Zwischenraum 10 nicht, so dass bei einer Volumenausdehnung der Volumenteile 12 des Kerns 5 eine Festigkeitserhöhung stattfindet.

Anschließend verweilt zur Abkühlung das derart gebildete Flächengebilde 1 im dem Formwergzeug 6, 7 bis der schmelzflüssige Zustand der eingesetzten Werkstoffe nicht weiter vorherrscht. Die Abkühlung kann durch aktive Kühltechniken beschleunigt werde. Das Kühlmedium kann das Formwerkzeug 6, 7 aktiv kühlen oder ebenfalls analog zu dem Heißwasserstrahl oder-dampf 16 durch den porösen Bereich 20 eingeblasen bzw. aufgebracht werden.

Nach Beendigung des Umformvorganges ist es oftmals erforderlich, die Ränder des Flächengebildes 1 zu bearbeiten, denn diese sind abzukanten oder abzugraten bzw. mit Phasen zu versehen, um Verletzungen oder sonstige Beschädigungen an empfindlichen Oberflächen zu vermeiden.

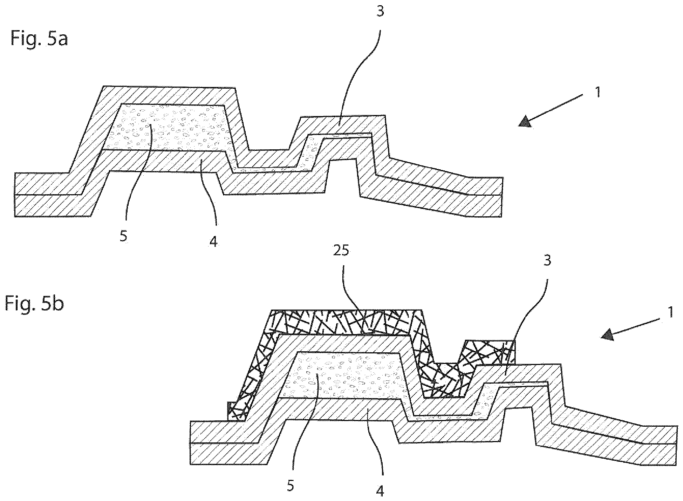

In Figur 5a ist das fertige Flächengebilde 1 dargestellt. Die Deckschichten 3, 4 können aus unterschiedlichen und der Anwendung angepassten Thermoplast-Werkstoffen gebildet werden. Eine Beimischung von Schnittfasern oder einer Verstärkung der Werkstoffe durch die Zugabe von Geweben kann erfolgen.

Das in Figur 5b dargestellte Flächengebilde 1 ist mit einer Funktionsschicht 25 auf einer der Außenseite übermantelt. Die Funktionsschicht 25 kann gas- und/oder flüssigkeitsdicht ausgeführt sein und als Sichtschutz, beispielsweise Teppich, ausgeführt werden. Es ist auch möglich, die Funktionsschicht 25 hitzebeständig oder hitzeabweisend auszuführen, so dass das hergestellte Flächengebilde 1 in einem Bereich mit Hitze, die beispielsweise von Auspuffrohren stammt, eingebaut werden kann. Die gemäß den vorstehenden Figuren herstellte Form des Flächengebildes 1 ist dabei völlig beliebig, so dass in alle Richtungen abstehende Hinterschneidungen, Vorsprünge, Nasen oder dgl. angeformt bzw. angearbeitet werden können, die in dem einzigen Umformvorgang entstehen.

Die Verwendung des erfindungsgemäßen Flächengebildes 1 soll und kann völlig beliebig sein. Es ist vorstellbar, das Flächengebilde 1 als Abdeckhaube, als Gehäuseeinlage, als Unterboden oder Unterkonstruktion an Fahrzeugkarosserien bzw. in Fahrzeugräume einzusetzen. Es ist auch möglich, das Flächengebilde 1 als Möbelstück, beispielsweise Schrankwand oder Bettgestell, auszuführen. Darüber hinaus ist es vorstellbar, das Flächengebilde 1 als Gehäuse von Monitoren oder Werkzeugmaschen zu verwenden.

Es versteht sich, dass eine beliebige Anzahl von Deckschichten 3, 4 abwechselnd zu dem Kern 5 vorgesehen sein können, so dass das Flächengebilde 1 aus einer Vielzahl von Deckschichten 3, 4 und Kernen 5 aufgebaut ist.

## Patentansprüche

1. Verfahren zur Herstellung eines formstabilen Flächengebildes (1) in Sandwich-Leichtbau-Ausführung mit mindestens zwei Deckschichten (3, 4) und einem Kern (5), der zwischen zwei der Deckschichten (3, 4) angeordnet ist,
nachfolgende Verfahrensschritte umfassend:
a) Verwenden der Werkstoffe expandierbares Polypropylen (EPP), expandierbares Polystyrol (EPS) oder expandierbares Polyethylen (EPE) als Kern (5),
b) Verwenden eines oder mehrerer Thermoplast-Werkstoffe als Deckschicht (3, 4),
c) Vorwärmen der Deckschichten (3, 4) bis zum Erreichen des thermoplastischen Zustandes,
d) Einsetzen der erwärmten Deckschichten (3, 4) an jeweils ein Formwerkzeug (6 oder 7),
e) Umformen der Deckschichten (3, 4) mittels der beiden Formwerkzeuge (6, 7) und Einspritzen des Kerns (5), derart, dass an mindestens einer der Deckschichten (3, 4) durch eine Unterdruckeinrichtung (14) ein Unterdruck gebildet ist, der zwischen den beiden benachbarten Deckschichten (3, 4) auf den Kern (5) einwirkt und dass durch den Unterdruck die Ausdehnung und die Verteilung der den Kern (5) bildenden Volumenteile (12) beeinflussbar ist,
f) Erhitzen der Deckschichten (3, 4) und des Kernes (5) zum Verschweißen des Kerns (5) und der Deckschichten (3, 4) mit dem Kern (5),
g) Abkühlen des umgeformten Flächengebildes (1) in den Formwerkzeugen (6, 7) und
h) Entnehmen des Flächengebildes (1) aus den Formwerkzeugen (6, 7).

2. Verfahren nach Anspruch 1,
**dadurch gekennzeichnet,**
**dass** die Deckschichten (3, 4) durch die Formwerkzeuge (6, 7) zusammenfügt sind, derart, dass mindestens ein von den Deckschichten (3, 4) eingeschlossener Zwischenraum (10) entsteht und dass jeder der Zwischenräume (10) eine Einfüllöffnung (15) aufweist, durch die der Kern (5) mittels einer Druckkolbens (11) einspritzbar oder eindrückbar ist,

3. Verfahren nach Anspruch 2,
**dadurch gekennzeichnet,**
**dass** der Kern (5) aus einer Vielzahl von vereinzelten Volumenteilen (12) gebildet ist, die mittels eines Wasserdampfes (16) in den thermoplastischen Zustand, nach dem die Volumenteile (12) in den Zwischenraum (10) angeordnet sind, überführt sind.

4. Verfahren nach Anspruch 1,
**dadurch gekennzeichnet,**
**dass** die Deckschichten (3, 4) und der Kern (5) jeweils eine vorgegebene Struktur bzw. Kontur aufweisen, die ineinander einlegbar sind.

5. Verfahren nach einem der vorgenannten Ansprüche,
**dadurch gekennzeichnet,**
**dass** die Ränder des gefertigten Flächengebildes (1) bearbeitet sind, vorzugsweise in Form einer Abkantung und/oder zur Herstellung einer vorgegebenen Außenkontur.

6. Verfahren nach Anspruch 1,
**dadurch gekennzeichnet,**
**dass** während des Umformvorganges an mindestens einer der Deckschichten (3, 4) ein Überdruck erzeugt ist, durch den der Kern (5) aufgeweitet oder vergrößert ist.

7. Verfahren nach einem der vorgenannten Ansprüche,
**dadurch gekennzeichnet,**
**dass** die vorerwärmten Deckschichten (3, 4) in dem jeweiligen Formwerkzeug (6, 7) mittels Nadeln oder einem Unterdruck gehalten sind, um diese voneinander zu beabstanden.

8. Verfahren nach einem der vorgenannten Ansprüche,
**dadurch gekennzeichnet,**
**dass** der Kern (5) einstückig und plattenförmig ausgestaltet ist, dass der Kern (5) zwischen die beiden erwärmten Deckschichten (3, 4) eingelegt ist und dass die Deckschichten (3, 4) und der Kern (5) einen Körper (2) bilden, der in den thermoplastischen Zustand erhitzt und anschließend zwischen die beiden Formwerkzeuge (6, 7) eingelegt ist.

9. Verfahren nach einem der vorgenannten Ansprüche,
**dadurch gekennzeichnet,**
**dass** in mindestens eine der Deckschichten (3, 4) ein Vlies oder ein sonstiges Gewebe aus Kunststoff, Metall und/oder Gummi eingearbeitet bzw. vorgesehen ist.

10. Verfahren nach einem der vorgenannten Ansprüche,
**dadurch gekennzeichnet,**
**dass** die Wandstärke über das gesamte Flächengebilde (1) gleich oder unterschiedlich breit bemessen ist und dass die Wandstärke des Flächengebildes (1) in Abhängigkeit von der Struktur der Formwerkzeuge (6, 7) und/oder dem auf den Kern einwirkenden Unter- und/oder Überdruck einstellbar ist.

## Claims

1. A method of producing a flat article (1) in sandwich lightweight construction design with at least two covering layers (3, 4) and a core (5) arranged between two of the covering layers (3, 4),
comprising the following process steps:
a) Using the materials expandable polypropylene (EPP), expandable polystyrene (EPS) or expandable polyethylene (EPE) as the core (5),
b) Using one or more thermoplastic materials as the covering layer (3, 4),
c) Preheating the covering layers (3, 4) until reaching the thermoplastic condition,
d) Applying the heated covering layers (3, 4) on one forming tool (6 or 7) each,
e) Forming the covering layers (3, 4) using the two forming tools (6, 7) and injecting the core (5) in such a way as to generate a negative pressure at least on one of the covering layers (3, 4) by means of a vacuum device (14), in which case the negative pressure acts on the core (5) between the two adjacent covering layers (3, 4) and makes it possible to influence the extension and the distribution of the volume parts (12) which make up the core (5),
f) Heating the covering layers (3, 4) and the core (5) for bonding the core (5) and the covering layers (3, 4) with the core (5),
g) Cooling the formed flat article (1) in the forming tools (6, 7),
h) Removing the flat article (1) from the forming tools (6, 7).

2. The method in accordance with Claim 1,
**characterised in that**,
the covering layers (3, 4) are joined together by the forming tools (6, 7) in such a way that at least one cavity (10) enclosed by the covering layers (3, 4) is created and that each of the cavities (10) has a filling opening (15) by means of which the core (5) can be injected or pressed in using a pressing piston (11).

3. The method in accordance with Claim 2,
**characterised in that**,
the core (5) is formed from a plurality of individual volume parts (12) which are converted into a thermoplastic status by means of water vapour (16) after the volume parts (12) have been arranged in the cavity (10).

4. The method in accordance with Claim 1,
**characterised in that**,
the covering layers (3, 4) and the core (5) each have a specified structure or contour, which can be inserted one inside the other.

5. The method in accordance with one of the aforementioned claims,
**characterised in that**,
the edges of the finished flat article (1) are processed, preferably in the form of edging and/or in order to manufacture a specified external contour.

6. The method in accordance with Claim 1,
**characterised in that**,
during the forming procedure, negative pressure is generated at least on one of the covering layers (3, 4), by means of which the core is expanded or increased in size.

7. The method in accordance with one of the aforementioned claims,
**characterised in that**,
the pre-heated covering layers (3, 4) are held in the corresponding forming tool (6, 7) by means of needles or negative pressure in order to impose a distance between them.

8. The method in accordance with one of the aforementioned claims,
**characterised in that**,
the core (5) is configured as one piece and with a panel shape, that the core (5) is inserted between the two heated covering layers (3, 4) and that the covering layers (3, 4) and the core (5) form one body (2) which is heated to the thermoplastic status and then inserted between the two forming tools (6, 7).

9. The method in accordance with one of the aforementioned claims,
**characterised in that**,
a nonwoven material or another article made of plastic, metal and/or rubber is worked into or provided in at least one of the covering layers (3, 4).

10. The method in accordance with one of the aforementioned claims,
**characterised in that**,
the wall thickness is of an equal width or different widths over the entire flat article (1) and that the wall thickness of the flat article (1) can be adjusted depending on the structure of the forming tools (6, 7) and/or the negative and/or positive pressure acting on the core.

## Revendications

1. Procédé de fabrication d'une structure plate à forme stable (1) de construction légère en sandwich avec au moins deux couches de recouvrement (3, 4) et un noyau (5) disposé entre deux des couches de recouvrement (3, 4),
les phases du procédé comprenant :
a) l'utilisation des matériaux suivants : polypropylène (EPP) se détendant, polystyrol (EPS) se détendant ou polyéthylène se détendant, en tant que noyau (5),
b) l'utilisation d'un ou de plusieurs matériaux thermoplastiques en tant que couche de recouvrement (3, 4),
c) le préchauffage des couches de recouvrement (3, 4) jusqu'à l'atteinte de l'état thermoplastique,
d) l'insertion des couches de recouvrement réchauffées (3, 4) dans respectivement un outil de formage (6 ou 7),
e) le reformage des couches de recouvrement (3, 4) à l'aide des deux outils de formage (6 ou 7) et injection du noyau (5) de sorte que moyennant un équipement de dépression (14), il est formé une dépression sur au moins une des couches de recouvrement (3, 4), la dépression agissant, entre les deux couches de recouvrement voisines (3, 4), sur le noyau (5) et que la dépression permet d'influer sur l'extension et la répartition des parts de volume (12) formant le noyau (5),
f) le réchauffage des couches de recouvrement (3, 4) et du noyau (5) en vue du soudage des couches de recouvrement (3, 4) avec le noyau (5).
g) le refroidissement de la structure plate reformée (1) dans les outils de formage (6 ou 7) et
h) l'extraction de la structure plate reformée (1) des outils de formage (6 ou 7).

2. Procédé d'après la revendication 1,
**caractérisé en ce que**
les couches de recouvrement (3, 4) sont jointes par les outils de formage (6 ou 7) de sorte qu'il soit formé au moins un espace intermédiaire (10) renfermé par les couches de recouvrement (3, 4) et que chacun des espaces intermédiaires (10) possède une ouverture de remplissage (15) qui permet d'injecter ou d'enfoncer le noyau (5) à l'aide d'un piston de pression.

3. Procédé d'après la revendication 2,
**caractérisé en ce que**
le noyau (5) est composé d'une multitude de parts de volume individuelles (12) qui, moyennant une vapeur d'eau (16), sont transformées en état thermoplastique après l'arrangement des parts de volume (12) dans l'espace intermédiaire (10).

4. Procédé d'après la revendication 1,
**caractérisé en ce que**
les couches de recouvrement (3, 4) et le noyau (5) ont respectivement une structure ou un contour définis à l'avance de sorte à se laisser insérer les uns dans les autres.

5. Procédé d'après une des revendications précédentes,
**caractérisé en ce que**
les bords de la structure plate fabriquée (1) sont traités, de préférence par taillage en chanfrein et/ou par la réalisation d'une structure extérieure définie.

6. Procédé d'après la revendication 1,
**caractérisé en ce que**
lors de la transformation, il est établi une surpression sur au moins une des couches de recouvrement (3, 4) qui a pour effet que le noyau (5) est évasé ou agrandi.

7. Procédé d'après la revendication 1,
**caractérisé en ce que**
les couches de recouvrement réchauffées (3, 4) sont retenues par des aiguilles ou par dépression dans les outils de formage (6, 7) afin de les espacer les unes des autres.

8. Procédé d'après une des revendications précédentes,
**caractérisé en ce que**
le noyau (5) est réalisé en une pièce ou sous la forme de plaques, que le noyau (5) est inséré entre les deux couches de recouvrement réchauffées (3, 4) et que les couches de recouvrement réchauffées (3, 4) et le noyau (5) forment un corps (2) réchauffé en état thermoplastique et inséré ensuite entre les deux outils de formage (6, 7).

9. Procédé d'après une des revendications précédentes,
**caractérisé en ce que**
dans au moins une des couches de recouvrement (3, 4), il est pratiqué ou prévu une étoffe nappée ou un tissu quelconque en matière plastique, en métal et/ou en caoutchouc.

10. Procédé d'après une des revendications précédentes,
**caractérisé en ce que**
l'épaisseur de la paroi est identique ou d'une largeur différente sur toute la structure plate (1) et que l'épaisseur de la paroi de la structure plate (1) se laisse régler en dépendance de la structure des outils de formage (6, 7) et/ou de la dépression et/ou la surpression agissant sur le noyau (5).
